# EUROPEAN PATENT APPLICATION

(11) **EP 1 229 428 A1**
(43) Date of publication of application: **07.08.2002**
(21) Application number: 01850023.1
(22) Date of filing: 02.02.2001
(51) Int. Cl.: G06F 1/16

(54) **A portable touch screen device**

(71) Applicant: TELEFONAKTIEBOLAGET L M ERICSSON (publ), 126 25 Stockholm (SE)
(72) Inventor: Pensjö, Tomas, 177 60 Järfälla (SE)
(74) Representative: Rosenquist, Per Olof

(57) **Abstract**

A portable electronic device (101) comprising a touch screen (103) for displaying a user interface, a pen (105) for entering commands and/or data to the touch screen (103), and a holder (107) for storing the pen (105). In order to facilitate the operation of the device by a user, the device further comprises a pen detecting mechanism (109) for detecting whether the pen (105) is located in the holder (107), and a control unit (111) for changing the appearance of the user interface in response to signals from the pen detecting mechanism (109).

## Description

### TECHNICAL FIELD

The present invention relates to a portable touch screen device, such as a PDA (Personal Digital Assistant) or a smart phone, and is intended to facilitate the operation of the device by a user.

### BACKGROUND OF THE INVENTION AND PRIOR ART

Today, the use of portable or hand-held touch screen devices has become increasingly common. Examples of conventional touch screen devices include Personal Digital Assistants (PDA) and smart phones. These devices include a touch screen for presenting screen information and allowing the input of operational commands and/or data by touching the screen in a certain predefined manner. The screen can be touched by a human finger or, more commonly, by a pen-like pointing tool which is typically attachable to the device by means of some holding mechanism on the device. The pointing tool may be designed to have any shape, but most often it has a shape like a pen or stylus, and is hereafter referred to as a pen.

Presently, there is an increasing demand for touch screen devices which have improved functionality and are user-friendly.

### SUMMARY

It is an object of the present invention to provide a method and a device which facilitates the operation by a user of a portable touch screen device. This object and others are obtained by a method and a touch screen device, in particular a wireless communication device, wherein the presence of a pen in a pen holder of the touch screen device is detected by a mechanism, such as a switch. The appearance of the user interface, in particular the layout of the screen, is changed when the pen is removed from or placed in the pen holder. Also, the illumination characteristics of the screen, such as brightness or colour, may be changed in response to the presence of the pen in the pen holder.

The pen detection mechanism can be used for switching between two different input modes. For example, removal of the pen from the pen holder may trigger the appearance of an alphabetic keyboard, which can be used for input of alphanumeric characters. Further, the change in appearance of the user interface may preferably depend on the applications used.

The use of the pen detection mechanism will in many applications facilitate the use of a portable touch screen apparatus. For example, when a user of a smart phone removes the pen from the pen holder, the user probably wants to input some kind of information. If the screen then is automatically changed into a layout which is designed for input of information, this will be very helpful to the user.

### BRIEF DESCRIPTION OF THE DRAWINGS

The present invention will now be described in more detail and with reference to the accompanying drawings, in which:
- Fig. 1 is a perspective view of a portable device comprising a touch screen used for input of commands and/or data.
- Fig. 2 is a flowchart illustrating method steps performed when the apparatus of Fig. 1 is used.
- Fig. 3 is a front view of a mobile telephone comprising a touch screen being in a first mode.
- Fig. 4 is a view similar to that of Fig. 3, the touch screen being in a second mode.
- Fig. 5 is a front view of a hand-held electronic device comprising a touch screen.

### DESCRIPTION OF PREFERRED EMBODIMENTS

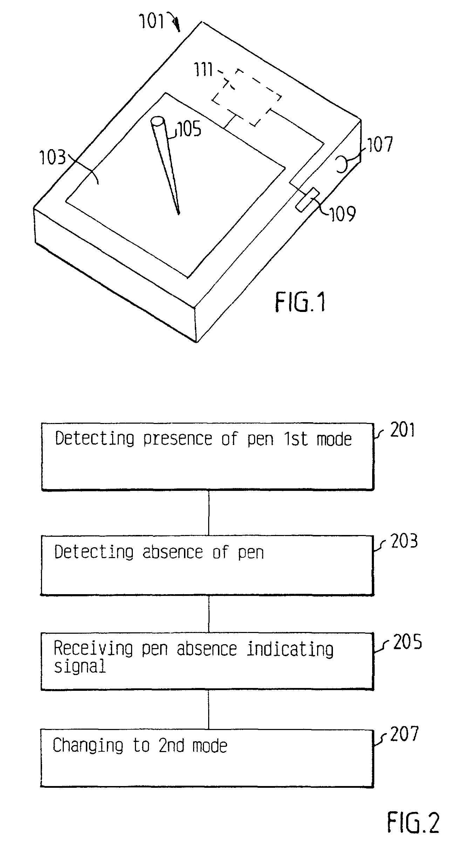

Fig. 1 illustrates a view of a portable device 101 comprising a touch sensitive screen display 103 used for input of operational commands and/or data. The device 101 further includes a pen 105 as a pointing tool for touching specific areas of the screen display 103 in a predefined manner. When not in use, the pen can be placed in a pen holder 107 of the portable device. The pen holder is in this example placed on the side of the device and comprises a ring for receiving the pen. The pen holder may of course be designed and placed in many different ways within the scope of the invention, such as a recess together with some kind of a spring-like element. The device 101 further comprises a mechanism 109 for detecting whether the pen is located in the holder or not, and an electronic control unit 111 connected to the pen detecting mechanism 109. The control unit 111 operates to control circuits, not shown, for displaying various patterns, pictures and/or information on the screen display 103.

The flowchart of fig. 2 illustrates a method performed by the apparatus of Fig. 1 when operated by a user. Thus, when it is detected that the pen 105 is placed in the pen holder 107, the screen display 103 is in a first mode, see step 201, which is controlled by the control unit 111 in response to a signal received from the pen detecting mechanism 109. For example, the device may then be in a sleep mode, i.e., a passive state when the screen display 103 is not responsive to input by touching. However, the screen may in this mode be capable of displaying incoming calls or messages, calendar triggered reminders etc. When it is detected that the pen has been removed from the pen holder 107 in step 203, a signal indicating absence of the pen is received by the control unit 111 from the pen detecting mechanism 109, see step 205. The control unit 111 then controls the screen display 103 to change into a second mode, see step 207. This second mode may be an active state in which the screen display 103 is responsive to input by touching. The screen may in this mode display various input keys, buttons or symbols, such as an alphanumeric keyboard.

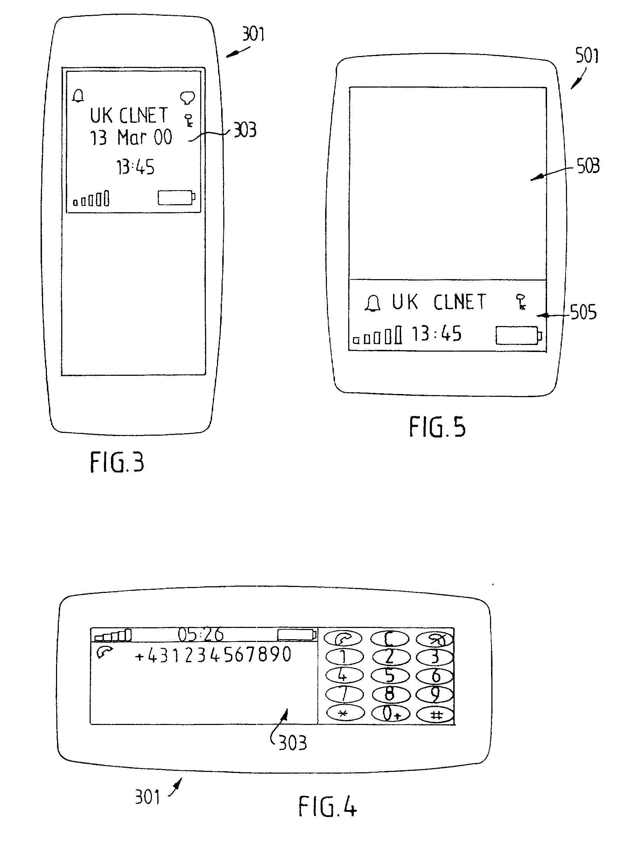

Fig. 3 is a view of an exemplary mobile telephone 301 comprising a touch screen display 303 being in a sleep mode due to the presence of a pen in a pen holder, not shown. the layout of the screen display 303 is in a "portrait" format.

Fig. 4 is a view of the mobile telephone 301 of Fig. 3 after the pen has been removed from the pen holder. In this example, the layout of the screen display 303 has been changed into a "landscape" format including a numeric keyboard.

Finally, Fig. 5 is a view of an exemplary electronic device 501, comprising a touch screen 503, where the device has changed from a sleeping mode into an active mode in response to the pen being removed from the pen holder, not shown. The user may be alerted of the change into the active mode by illuminating, e.g., the lower part 505 of the screen 503.

According to one aspect of the invention, the device is in a first passive mode, or sleep mode, when the pen is present in the pen holder 107. In this state, the touch functionality of the screen is preferably not activated such that data or commands cannot be entered by mistake, e.g., when the device is located in a pocket or a suitcase. The screen may in this mode display various information, such as phone numbers, e-mails, reminder alerts etc. When the device switches from the first mode to a second active mode after the pen has been removed from the pen holder 107, the screen appearance changes into a layout designed for input of commands and/or data and also the touch functionality of the screen is activated.

According to another aspect of the invention, the change of appearance or layout of the screen, as triggered by the pen detecting mechanism 109, may be different depending on the applications used by the device. Thus, for example, if a telephone application is used, removal of the pen may trigger the appearance of a display layout including a numeric keyboard for entering a telephone number. On the other hand, if an e-mail application is used, removal of the pen may instead trigger the appearance of an alphanumeric keyboard, which can be used for input of alphanumeric characters.

While the invention has been described with reference to specific exemplary embodiments, the description is only intended to illustrate the inventive concept and should not be taken as limiting the scope of the invention. Various alternatives, modifications and equivalents may be used without departing from the spirit of the invention, which is defined by the appended claims.

## Claims

1. A portable electronic device comprising a touch screen (103) for displaying a user interface, a pen (105) for entering commands and/or data to the touch screen (103), and a holder (107) for storing the pen (105), **characterized by**
- a pen detecting mechanism (109) for detecting whether the pen (105) is located in the holder (107), and
- a control unit (111) connected to the pen detecting mechanism (109) for changing the appearance of the user interface in response to signals from the pen detecting mechanism (109).

2. A device according to claim 1, **characterized in that** the control unit (111) is arranged to change the layout of the user interface.

3. A device according to claim 1 or 2, **characterized in that** the control unit (111) is arranged to change the illumination characteristics of the user interface.

4. A device according to claim 2 or 3, **characterized in that** the control unit (111) is arranged to change the layout from a first passive mode to a second active mode in response to signals from the pen detecting mechanism (109) indicating that the pen (105) has been removed from the holder (107).

5. A device according to claim 4, **characterized in that** in the first passive mode, the touch screen (103) is non-responsive to input, and in the second active mode, the touch screen (103) is responsive to input.

6. A device according to any of the claims 2 - 5,
**characterized in that** the layout of the user interface is in a portrait format in the first passive mode, and in a landscape format in the second active mode.

7. A device according to any of the claims 4 - 6,
**characterized in**
**that** in the second active mode, the layout of the user interface includes a keyboard.

8. A device according to any of the claims 1 - 7,
**characterized in**
**that** the control unit (111) operates to change the appearance of the user interface based on an application used by the device.

9. A device according to any of the claims 1 - 8,
**characterized in**
**that** the device is capable of wireless communication.

10. A device according to any of the claims 1 - 9,
**characterized in**
**that** the pen detecting mechanism (109) is a switch.

11. A method of controlling a portable electronic device (101) comprising a touch screen (103) for displaying a user interface, a pen (105) for entering commands and/or data to the touch screen (103), and a holder (107) for storing the pen (105), **characterized by** the steps of:
- detecting whether the pen (105) is located in the holder (107), and
- changing the appearance of the user interface in response to the detecting step.

12. A method according to claim 11, **characterized in that** the detecting step includes sending signals from a pen detecting mechanism (109), indicating presence or absence of the pen (105) in the holder (107), to a control unit (111).

13. A method according to claim 11, **characterized in that** the appearance changing step includes switching the layout of the user interface from a first passive mode to a second active mode in response to signals from a pen detecting mechanism (109) indicating that the pen (105) has been removed from the holder (107).

14. A method according to claim 13, **characterized in that** in the first passive mode, the touch screen (103) is non-responsive to input, and in the second active mode, the touch screen (103) is responsive to input.

15. A method according to claim 11, **characterized in that** the appearance changing step includes switching the layout of the user interface based on an application used by the device (101).

16. A method according to any of the claims 11 - 15,
**characterized in**
**that** the device is capable of wireless communication.
